# EUROPEAN PATENT SPECIFICATION

(11) **EP 1 755 184 B1**
(45) Date of publication and mention of the grant of the patent: **18.01.2012**
(21) Application number: 06729156.7
(22) Date of filing: 15.03.2006
(51) Int. Cl.: H01M 4/32, H01M 4/62, H01M 4/26, H01M 4/24

(54) **METHOD FOR PRODUCING ELECTRODE PASTE MIXTURE FOR ALKALINE STORAGE BATTERY**
PRODUKTIONSMETHODE EINER PASTENMISCHUNG FÜR ELEKTRODEN EINER ALKALISCHEN SPEICHERBATTERIE
PROCÉDÉ DE PRODUCTION D UN MÉLANGE DE PÂTE POUR ÉLECTRODE POUR UNE BATTERIE D ACCUMULATEURS ALCALINE

(30) Priority: 29.06.2005 JP 2005189410
(43) Date of publication of application: 21.02.2007
(73) Proprietor: Panasonic Corporation, Kadoma-shi Osaka 571-8501 (JP)
(72) Inventor: KAWAKATSU, Tohru, Chuo-ku, Osaka-shi, Osaka 540-6319 (JP); NAKAI, Haruya, Chuo-ku, Osaka-shi, Osaka 540-6319 (JP); EBIHARA, Takashi, Chuo-ku, Osaka-shi, Osaka 540-6319 (JP); YUASA, Kohji, Chuo-ku, Osaka-shi, Osaka 540-6319 (JP); IWAHASHI, Fumio Matsushita Electric Ind. Co.,Ltd., Chuo-ku, Osaka-shi, Osaka 540-6319 (JP)
(74) Representative: Grünecker, Kinkeldey, Stockmair & Schwanhäusser
(86) International application number: PCT/JP2006/305135
(87) International publication number: WO 2007/000840

(56) References cited:
- EP-A2- 0 840 384
- JP-A- 05 314 981
- JP-A- 07 114 919
- JP-A- 08 083 613
- JP-A- 10 012 231
- JP-A- 62 122 063
- JP-A- 2001 266 863
- JP-A- 2001 319 645

## Description

### TECHNICAL FIELD

The present invention relates to a manufacturing method of electrode paste for alkaline storage batteries, and more particularly to technology for better dispersibility of negative and positive electrode pastes, which is essential for improving characteristics of alkaline storage batteries.

### BACKGROUND ART

The rapidly increasing use of information equipment is creating a demand for the development of alkaline storage batteries with high energy density. In the field of nickel cadmium storage batteries (NiCd batteries), in response to the demand, the capacity of NiCd batteries using a conventional sintered-nickel positive electrode has been increasing; and, even higher (30 to 60%) energy density types using a nickel positive electrode of sponged metal type, have been developed. Additionally, nickel-metal-hydride storage batteries (Ni/MH batteries), which use a hydrogen-storing alloy as a negative electrode so as to achieve a higher capacity than NiCd batteries, have been developed.

With respect to Ni/MH batteries, a three-dimensional porous metal which has high porosity, such as sponged nickel and porous metal made of nickel fibers, is used as an electrode support to improve the energy density of the positive electrode. A positive electrode, made by a dense-filling and rolling of this electrode support with an electrode paste containing active material, such as nickel hydroxide and hydrogen-storing alloy, is used in Ni/MH batteries.

To improve characteristics, including utilization and high-temperature property, a wide range of additives is added to these positive and negative electrodes. Since the additives have smaller average particle sizes than the active materials in general, several proposals on manufacturing methods of electrode paste for more efficient dispersion have been made. For example, Japanese Patent Unexamined Publication No. H06-036767 discloses a method of improving the dispersibility of an additive so as to improve its utilization, by changing the number of agitations during kneading. Japanese Patent Unexamined Publication No. H10-106552 discloses a method of improving the effect of an additive by adding an alkali solution to a mixture of active material and the additive and kneading them. In addition, Japanese Patent Unexamined Publication No. 2001-167756 proposes a method of improving dispersibility by kneading active material and an additive to a thick consistency. Accordingly, the dispersibility of powders of active material and additive needs to be improved in the electrode paste for alkaline storage batteries.

On the other hand, the electrode paste for alkaline storage batteries needs to have appropriate viscosity for suppressing variations in filling amount. For this purpose, a thickener is generally added to the electrode paste. Polysaccharide, which has a high alkali resistance and high electrochemical stability, is used as this thickener. However, when polysaccharide and several types of powder with different average particle sizes are kneaded, dispersion becomes uneven in all of the above methods, causing a loss of utilization of the active material.

### SUMMARY OF THE INVENTION

The present invention offers a manufacturing method of electrode paste for efficient alkaline storage batteries which improves the dispersibility of each additive added to the electrode for improving battery characteristics while using a polysaccharide that remains stable in the environment of battery use. In the manufacturing method of electrode paste of the present invention for alkaline storage batteries, two types of powder with different average particle sizes are kneaded with polysaccharide. A first powder has an average particle size ranging between 0.1 µm and 5 µm, and A second powder has an average particle size ranging between 8 µm and 35 µm. In a first kneading step, the first powder and polysaccharide are kneaded. In a second kneading step, the mixture prepared in the first kneading step and the second powder are kneaded. The manufacturing method of the present invention improves the dispersibility of two types of powder with different average particle sizes. If the first powder which has a smaller particle size is an additive, its effect thus will significantly improve. Accordingly, alkaline storage batteries with good battery characteristics, including cycle life, are achieved.

### BRIEF DESCRIPTION OF THE DRAWINGS

Fig. 1 illustrates a manufacturing method of electrode paste for alkaline storage batteries in an exemplary embodiment of the present invention.
Fig. 2 illustrates a manufacturing method of electrode paste for alkaline storage batteries, which is different from the exemplary embodiment of the present invention.

### REFERENCE MARKS IN THE DRAWINGS

1 First powder
2 Second powder
3 Polysaccharide
4 Dispersion medium
5 Particulate binder

### DETAILED DESCRIPTION OF THE PREFERRED EMBODIMENTS

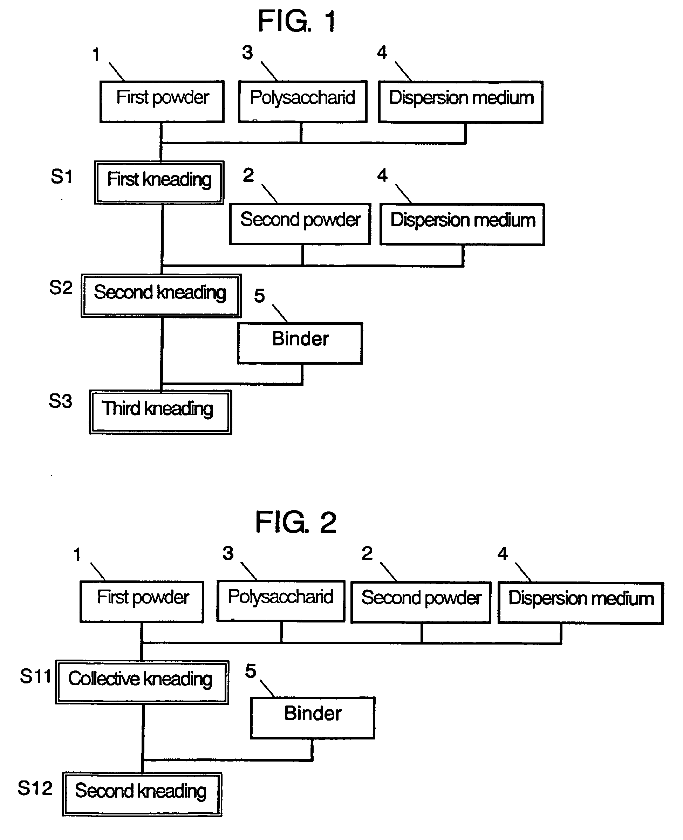

Fig. 1 illustrates a manufacturing method of electrode paste for alkaline storage batteries in an exemplary embodiment of the present invention. In first kneading step S1 (hereinafter briefly referred to as "S1"), first powder 1 with an average particle size ranging between 0.1 µm and 5 µm, appropriate amount of polysaccharide 3, and dispersion medium 4 such as water and polar solvent are kneaded in advance. Then in second kneading step S2 (hereinafter referred to as "S2"), second powder 2 with an average particle size ranging between 8 µm and 35 µm is added to a first mixture prepared in S1, and an appropriate amount of dispersion medium 4 is further added as required and kneaded. In this way, first powder 1 with a smaller average particle size and polysaccharide 3 are kneaded first, and then this mixture and second powder 2 with a larger average particle size are kneaded in the exemplary embodiment. If a dispersion medium is already contained in polysaccharide 3 in S1, dispersion medium 4 may not be further added. In any case, first powder 1 and polysaccharide 3 are kneaded in the presence of a dispersion medium in S1.

Polysaccharide 3 has a chain structure formed of recurring units, mainly of saturated six-membered rings, and thus its thickening capability is high. However, since the six-membered rings are saturated binding, they have a large steric barrier, resulting in the chain structure lacking flexibility in bending. Accordingly, if first powder 1, second powder 2, and polysaccharide 3 are added and kneaded simultaneously, polysaccharide 3, which has no flexibility, selectively adsorbs only to the second powder 2 which has a larger particle size. In particular, if second powder 2 is an active material with a moderate spherical surface, polysaccharide 3 will more selectively adsorb to second powder 2. Accordingly, first powder 1 is scarcely adsorbed to polysaccharide 3 which also acts as a dispersion medium; instead, it flocculates in the electrode paste, thus degrading dispersibility. Therefore, first powder 1 which is little adsorbed to polysaccharide 3 is kneaded with polysaccharide 3 first so as to improve the dispersibility of first powder 1 in the electrode paste. This improves the battery characteristics.

It is preferable for second powder 2 to be an active material and first powder 1 to be an additive, since the conductivity of the electrode paste and high-temperature charge efficiency of the battery, which are the effect of the additive, improves. It is also preferable if both first powder 1 and second power 2 are active materials, since the battery capacity can be increased by improved coating property and filling factor (filling weight per unit volume) of the electrode paste.

The average particle size of second powder 2 needs to be in the range between 8 µm and 35 µm. Sizes below 8 µm are unfavorable because the adsorptive property of polysaccharide 3 falls. Sizes over 35 µm are also unfavorable, since the coating property and the filling factor of the electrode paste significantly degrade.

The average particle size of first powder 1 needs to be in the range between 0.1 µm and 5 µm. Sizes below 0.1 µm are unfavorable because the adsorptive property of polysaccharide 3 falls even if the above-described manufacturing method is applied. Sizes over 5 µm are also unfavorable because the functions of the additive and the coating property and the filling factor of the electrode paste significantly degrade.

From the view of improving adhesion between the materials of the electrode paste, third kneading step S3 is preferably provided as shown in Fig. 1 so as to further add particulate binder 5 to a second mixture prepared in S2.

Binder 5 is typically styrene-butadiene copolymer rubber (SBR), its denatured forms, polytetrafluoroethylene (PTFE), or denatured rubbers including acrylonitrile units. Binder 5 has functional groups including oxygen atom in the surface of binder 5 itself or in a surfactant adsorbed onto its surface. Such a functional group has high affinity with hydroxyl groups or ether sites present in polysaccharide 3. Accordingly, when binder 5 is used to improve the adhesion between the materials in the electrode paste, it is preferable to first knead polysaccharide 3, first powder 1 and second powder 2 which have low chemical affinity with polysaccharide 3, and then add binder 5and knead them.

When the above mentioned manufacturing method is applied to the positive electrode of an alkaline storage battery, nickel hydroxide is used as second powder 2, and at least one of cobalt, cobalt compound, and a rare-earth element compound is used as first powder 1. First powder 1, made of cobalt or cobalt compound, is added to provide a conductive network between nickel hydroxide particles as the positive active material, i.e., second powder 2 which is not conductive. The rare-earth element compound is added to mainly improve the charge efficiency at high-temperature. The characteristics of alkaline storage batteries are improved by manufacturing the positive electrode paste made of the above materials using the above manufacturing method. The cobalt compound is typically CoO, Co(OH)₂, or CoOOH. The rare-earth element compound is typically Y₂O₃, Yb₂O₃, Lu₂O₃, Tm₂O₃, or Er₂O₃.

In this case, it is preferable to use xanthan gum as polysaccharide 3. Xanthan gum includes a main-chain structure of bound glucoses and a side-chain structure made of mannose and the like. Xanthan gum has a greater thickening effect than carboxymethylcellulose (CMC) which is general polysaccharide 3 and only includes the main-chain structure. Accordingly, xanthan gum suppresses the settling of additives with high specific gravity such as cobalt, cobalt compounds, and rare-earth element compounds.

When the above manufacturing method is applied to the negative electrode of an Ni/MH battery, hydrogen-storing alloy is used as second powder 2, and a rare-earth element compound is used as first powder 1. The rare-earth element compound is added to improve charge efficiency of the Ni/MH battery at high-temperature and corrosion resistance of the hydrogen-storing alloy to the alkaline electrolyte. Characteristics of the Ni/MH battery are improved by manufacturing the negative electrode paste made of these materials using the manufacturing method described above. Examples of the rare-earth element compounds are the same as the additives to the aforementioned positive electrode. To increase conductivity, it is also preferable to add a carbon material made of hard carbon such as ketjenblack and carbon black. Although the secondary particle size of the carbon material varies depending on the state of flocculation, affinity with dispersion medium 4 is low according to the surface property thereof. It is thus preferable to knead the carbon material together with first powder 1 in S1.

In this case, polysaccharide 3 is preferably CMC or its denatured forms. As described above, polysaccharide 3 which includes a side-chain structure, such as xanthan gum, has a stronger thickening effect. However, if second powder 2 is a hydrogen-storing alloy, it is preferable to select CMC or its denatured forms. Alternatively, both can be mixed for use. This is because the particles of hydrogen-storing alloy are shaped like crushed stones, and are not spherical like nickel hydroxide. Therefore, polysaccharide 3 which has a structure that gives it relatively higher flexibility is more likely to adsorb to the hydrogen-storing alloy. Denatured forms of CMC include those in which an etherified part is replaced with a sodium salt or ammonium salt.

Other than the use of an active material as second powder 2 and an additive as first powder 1 as described above, nickel hydroxide with different average particle sizes may be used as first powder 1 and second powder 2. In this case, the coating property and the filling factor of the electrode paste are improved, contributing to increased battery capacity. In this case, it is preferable to coat the surface of nickel hydroxide with cobalt, a cobalt compound, or a rare-earth element compound, since the effect of the additive is further achievable in addition to improvement of the coating property and the filling factor.

The present exemplary embodiment is further detailed below with reference to specific examples. First, the case of using an additive as first powder 1 is described below.

The manufacturing method of a battery of sample E11 is described. As shown in Fig. 1, cobalt metal powder, CoOOH powder, and Yb₂O₃ powder which are first powder 1 (all with an average particle size of 4 µm), and xanthan gum powder which is polysaccharide 3 are kneaded with an appropriate amount of deionized water which is dispersion medium 4 in a planetary mixer for 30 minutes at a rotation rate of 50 r.p.m. (S1). Nickel hydroxide powder which is second powder 2 with an average particle size of 10 µm is added to this paste and kneaded in the planetary mixer for 20 minutes at a rotation rate of 10 r.p.m. (S2). Then, aqueous dispersion of PTFE which is binder 5 is added, and kneaded in the planetary mixer for 3 minutes at 20 r.p.m. (S3) to prepare a positive electrode paste with total weight of 350 kg. Here, the solid content of each substance relative to 100 part weight of nickel hydroxide is as follows. That of cobalt metal is 5 part weight, that of CoOOH is 5 part weight, that of Yb₂O₃ is 4 part weight, that of xanthan gum is 0.15 part weight, and that of PTFE is 0.1 part weight. The positive electrode paste as prepared above is injected into sponged nickel which is the electrode support. After drying and pressurizing the electrode support filled with the paste, it is cut to 35 mm in width, 220 mm in length, and 0.6 mm in thickness to form the positive electrode with a theoretical capacity of 2800 mAh.

On the other hand, as shown in Fig. 1, Y₂O₃ powder with an average particle size of 4µm which is first powder 1, ketjenblack powder which is a carbon material, and CMC which is polysaccharide 3 are mixed with an appropriate amount of deionized water in the planetary mixer for 20 minutes at a rotation rate of 40 r.p.m. (S1). Then, hydrogen-storing alloy powder with an average particle size of 27µm, which is second powder 2 that has undergone a dipping-treatment into hot alkali solution, is added to this paste and kneaded in the planetary mixer for 15 minutes at a rotation rate of 10 r.p.m. (S2). Aqueous dispersion of SBR which is binder 5 is then added to prepare a negative electrode paste with the total weight of 580 kg (S3). Here, the solid content of each substance relative to 100 part weight of hydrogen-storing alloy is as follows. That of Y₂O₃ is 0.7 part weight, that of ketjenblack is 0.3 part weight, and that of CMC is 0.15 part weight. The negative electrode paste as prepared above is applied to a punching metal which is two-dimensional porous metal. After drying and pressurizing the negative electrode paste, it is cut to 35 mm in width, 310 mm in length, and 0.30 mm in thickness so as to complete the negative electrode with a theoretical capacity of 4200 mAh.

The above positive electrode, negative electrode, and a separator made of sulfonated polypropylene for electrically separating the positive and negative electrodes, are spirally wound to prepare an electrode group. This electrode group is inserted into a metal case which also acts as a negative electrode terminal. Then, 4.7 cm³ of alkaline electrolyte, which has a specific gravity of 1.27 and contains potassium hydroxide, sodium hydroxide, and lithium hydroxide, is poured thereinto. Lastly, a lid which includes a safety valve and a positive electrode terminal is connected to the positive electrode, and the opening of the case is sealed with this lid. In this way, a cylindrical sealed Ni/MH battery is manufactured.

In the manufacture of samples E12 and E13, the average particle size of nickel hydroxide which is second powder 2 for the positive electrode is changed to 15 µm and 8 µm, respectively in the manufacturing method of sample E11. Other conditions are the same as E11 for manufacturing Ni/MH batteries of samples E12 and E13.

In the manufacture of sample E14, the average particle size of cobalt metal powder, CoOOH powder, and Yb₂O₃ powder which are first powder 1 for the positive electrode are all changed to 5 µm in the manufacturing method of sample E11. In the same way, in the manufacture of samples E15 and E16, the average particle sizes of first powder 1 for the positive electrode are changed to 2 µm and 0.1 µm, respectively. Other conditions are the same as sample E11 for manufacturing Ni/MH batteries of samples E14 to E16.

In the manufacture of samples E17 and E18, the average particle size of hydrogen-storing alloy powder which is second powder 2 for the negative electrode is changed to 20 µm and 35 µm, respectively, in the manufacturing method of sample E11. Other conditions are the same as sample E11 for manufacturing Ni/MH batteries of samples E17 and E18.

In the manufacture of samples E19, E110, and E111, the average particle size of Y₂O₃ powder which is first powder 1 for the negative electrode is changed to 5 µm, 2 µm, and 0.1 µm, respectively, in the manufacturing method of sample E11. Other conditions are the same as sample E11 for manufacturing Ni/MH batteries of samples E19, E110, and E111.

To compare with these samples E11 to E111, the following samples are manufactured. More specifically, as shown in Fig. 2, cobalt metal powder, CoOOH powder, and Yb₂O₃ powder which are first powder 1 for the positive electrode (all with an average particle size of 4 µm), xanthan gum powder which is polysaccharide 3, and nickel hydroxide powder with an average particle size of 10 µm are collectively kneaded together with an appropriate amount of deionized water which is dispersion medium 4, in the planetary mixer for 30 minutes at a rotation rate of 10 r.p.m. (S11). Then, aqueous dispersion of PTFE which is binder 5 is added in the same way as S3 for sample E11 to prepare a negative electrode paste (S12). Other conditions are the same as sample E11 for manufacturing Ni/MH batteries of sample C11. Accordingly, the manufacturing method of electrode paste in the exemplary embodiment is not applied to the manufacture of the positive electrode of sample C11.

In the manufacture of sample C12, Y₂O₃ powder and ketjenblack powder, which are first powder 1 for the negative electrode (both with an average particle size of 4 µm); CMC which is polysaccharide 3; and hydrogen-storing alloy powder with an average particle size of 27 µm which is second powder 2 for the negative electrode that has undergone a dipping-treatment into hot alkali solution; are collectively kneaded together with an appropriate amount of deionized water which is dispersion medium 4, in the planetary mixer for 20 minutes at a rotation rate of 10 r.p.m. (S11). Then, aqueous dispersion of SBR which is binder 5 is added in the same way as S3 for sample E11 to prepare the negative electrode paste (S12). Other conditions are the same as sample E11 for manufacturing Ni/MH batteries of sample C12. Accordingly, the manufacturing method of electrode paste in the exemplary embodiment is not applied to the manufacture of the negative electrode of sample C12.

In the manufacture of sample C13, the average particle size of nickel hydroxide which is second powder 2 for the positive electrode is changed to 7 µm in the manufacturing method of sample E11. Other conditions are the same as E11 for manufacturing Ni/MH batteries of sample C13.

In the manufacture of sample C14, the average particle sizes of cobalt metal powder, CoOOH powder, and Yb₂O₃ powder which are first powder 1 for the positive electrode are all changed to 6 µm in the manufacturing method of sample E11. In the same way, in the manufacture of sample C15, the average particle sizes of first powder 1 for the positive electrode are all changed to 0.05 µm in the manufacturing method of sample E11. Other conditions are the same as sample E11 for manufacturing Ni/MH batteries of samples C14 and C15.

In the manufacture of sample C16, the average particle size of hydrogen-storing alloy powder which is second powder 2 for the negative electrode is changed to 36 µm in the manufacturing method of sample E11. Other conditions are the same as E11 for manufacturing Ni/MH batteries of sample C16.

In the manufacture of samples C17 and C18, the average particle sizes of Y₂O₃ powder which is first powder 1 for the negative electrode are changed to 7 µm and 0.05 µm, respectively, in the manufacturing method of sample E11. Other conditions are the same as E11 for manufacturing Ni/MH batteries of samples C17 and C18.

Ni/MH batteries of each sample as manufactured above are left for 24 hours, and then charged and discharged for the first time at ambient temperature of 25°C as following. In the initial charge and discharge, the batteries are charged for 15 hours at 280 mA, left as they are for 1 hour, and then discharged at 900 mA until the voltage falls to 1.0 V. After this initial charge and discharge, the following characteristics are evaluated.

In the normal temperature charge-discharge test, the samples are charged for 16 hours at 280 mA at an ambient temperature of 25 °C, left for 1 hour, and then discharged at 560 mA until their voltage falls to 1.0 V. The discharge capacity in this test is determined as its normal-temperature discharge capacity.

In a high-temperature charge test, the samples are charged for 15 hours at 280 mA at an ambient temperature of 50°C, left for 3 hours at an ambient temperature of 25 °C, and then discharged at 900 mA at an ambient temperature of 25°C until their voltage falls to 1.0 V. The discharge capacity in this test is determined as its high-temperature charge capacity.

In an intermittent charge and storing test, the samples are charged for 10 hours at 280 mA at an ambient temperature of 25°C. An intermission cycle is then imposed, in which let the samples stand for 22 hours at an ambient temperature of 65 °C, followed by an auxiliary charge, which involves charging them for 2 hours at 280 mA. After repeating this cycle of intermission and auxiliary charge for one month, the discharge capacity is measured under the same conditions as the above normal-temperature charge-discharge test. The percentage of the discharge capacity after the test with respect to the discharge capacity before the intermittent charge and storing test is then calculated. This percentage is referred as "capacity recovery rate" hereinafter. The intermittent charge and storing test consisting of the intermission and auxiliary charge cycle and measurement of the discharge capacity is then repeated until this capacity recovery rate falls below 80%. The number of months of continuing this intermittent charge and storing test is counted. Table 1 shows the evaluation results and specifications of each sample.

**Table 1**

| Sample | Positive electrode | | | Negative electrode | | | Normal temp.*1 (mAh) | High temp.*2 (mAh) | 80% recovery (month) |
|---|---|---|---|---|---|---|---|---|---|
| | 1st powder (µm) | 2nd powder (µm) | Kneading method | 1st powder(µm) | 2nd powder (µm) | Kneading method | | | |
| E11 | 4 | 10 | Fig. 1 | 4 | 27 | Fig. 1 | 2693 | 2558 | 14 |
| E12 | 4 | 15 | Fig. 1 | 4 | 27 | Fig. 1 | 2690 | 2560 | 14 |
| E13 | 4 | 8 | Fig. 1 | 4 | 27 | Fig. 1 | 2667 | 2481 | 14 |
| E14 | 5 | 10 | Fig. 1 | 4 | 27 | Fig. 1 | 2630 | 2462 | 14 |
| E15 | 2 | 10 | Fig. 1 | 4 | 27 | Fig. 1 | 2658 | 2507 | 14 |
| E16 | 0.1 | 10 | Fig. 1 | 4 | 27 | Fig. 1 | 2642 | 2479 | 14 |
| E17 | 4 | 10 | Fig. 1 | 4 | 20 | Fig. 1 | 2689 | 2555 | 13 |
| E18 | 4 | 10 | Fig. 1 | 4 | 35 | Fig. 1 | 2677 | 2546 | 15 |
| E19 | 4 | 10 | Fig. 1 | 5 | 27 | Fig. 1 | 2680 | 2549 | 13 |
| E110 | 4 | 10 | Fig. 1 | 2 | 27 | Fig. 1 | 2697 | 2560 | 14 |
| E111 | 4 | 10 | Fig. 1 | 0.1 | 27 | Fig. 1 | 2684 | 2549 | 13 |
| C11 | 4 | 10 | Fig. 2 | 4 | 27 | Fig. 2 | 2591 | 2394 | 14 |
| C12 | 4 | 10 | Fig. 1 | 4 | 27 | Fig. 1 | 2687 | 2533 | 10 |
| C13 | 4 | 7 | Fig. 1 | 4 | 27 | Fig. 1 | 2589 | 2407 | 14 |
| C14 | 6 | 10 | Fig. 1 | 4 | 27 | Fig. 1 | 2595 | 2400 | 14 |
| C15 | 0.05 | 10 | Fig. 1 | 4 | 27 | Fig. 1 | 2571 | 2380 | 14 |
| C16 | 4 | 10 | Fig. 1 | 4 | 36 | Fig. 1 | 2682 | 2533 | 11 |
| C17 | 4 | 10 | Fig. 1 | 7 | 27 | Fig. 1 | 2688 | 2541 | 11 |
| C18 | 4 | 10 | Fig. 1 | 0.05 | 27 | Fig. 1 | 2676 | 2517 | 10 |

| | | | | | | | | | |
|---|---|---|---|---|---|---|---|---|---|
| *1: Normal-temperature discharge capacity *2: High temperature charge capacity | | | | | | | | | |

When the evaluation results for sample E11 are compared with the evaluation results for sample C11 which uses a different manufacturing method for the positive electrode paste, the normal-temperature discharge capacity and high-temperature charge capacity of sample E11 are larger. The positive electrode paste of sample C11 is prepared using a collective kneading method shown in Fig. 2. On the other hand, the positive electrode paste of sample E11 is prepared using the manufacturing method shown in Fig. 1. Accordingly, cobalt metal and CoOOH which are first powder 1 are efficiently dispersed, resulting in a better conductive network. This leads to an advantage of conferring an improved normal-temperature charge-discharge characteristic. Yb₂O₃ which is also first powder 1 is efficiently dispersed, achieving an advantage of an improved high-temperature charge characteristics, which is the effect of Yb₂O₃.

However, if the average particle size of nickel hydroxide which is second powder 2 is too small, as in the case of sample C13, xanthan gum which is polysaccharide 3 resists absorption onto nickel hydroxide itself. As a result, the dispersion efficiency of mainly Yb₂O₃ degrades, and thus the high-temperature charge characteristic degrades. In contrast, when the average particle size of nickel hydroxide is 8 µm or larger as in the case of samples E11 to E13, both the normal-temperature charge-discharge characteristic and high-temperature charge characteristic are favorable.

If the average particle size of the additive which is first powder 1 is too large as in the case of sample C14, the function of additive significantly drops, and thus the normal-temperature charge-discharge characteristic and high-temperature charge characteristic degrade. On the other hand, if the average particle size of the additive which is first powder 1 is too small as in the case of sample C15, the adsorptive property of polysaccharide 3 degrades even if the manufacturing method of the present exemplary embodiment is applied. This also leads to degraded normal-temperature charge-discharge characteristic and high-temperature charge characteristic. In contrast, if the average particle size is between 0.1 µm and 5 µm as in the case of samples E11 and E14 to E16, both the normal-temperature charge-discharge characteristic and high-temperature charge characteristic are favorable.

Next, when the evaluation results for sample E11 are compared with the evaluation results for C12 which is made by a different manufacturing method for the negative electrode paste, the number of months over which a capacity recovery rate of 80% can be retained is greater in sample E11. The negative electrode paste of sample C12 is prepared by the collective kneading method shown in Fig. 2. On the other hand, the negative electrode paste of sample E11 is prepared by the manufacturing method shown in Fig. 1. Accordingly, Y₂O₃ which is first powder 1 is efficiently dispersed, and thus the corrosion resistance of hydrogen-storing alloy powder to the alkaline electrolyte is improved, providing an advantage on an improved intermittent charge and storing characteristic.

If the average particle size of hydrogen-storing alloy which is second powder 2 is too large as in the case of sample C16, the coating property and filling factor of the negative electrode paste significantly degrades, and thus the intermittent charge and storing characteristic is low. On the other hand, if the average particle size of nickel hydroxide is 35µm or smaller as in the case of samples E11, E17, and E18, the intermittent charge and storing characteristic is favorable.

If the average particle size of the additive which is first powder 1 is too large as in the case of sample C17, the function of the additive significantly drops. On the other hand, the average particle size of Y₂O₃ which is first powder 1 for the negative electrode is too small as in the case of sample C18, the adsorptive property of polysaccharide 3 degrades even if the manufacturing method in the exemplary embodiment is applied. Both cases lead to a low level of intermittent charge and storing characteristic. In contrast, if the average particle size of the additive is between 0.1 µm and 5 µm as in the case of samples E11 and E19, E110, and E111, the intermittent charge and storing characteristic is favorable.

As described above, it is necessary to knead materials in two steps S1 and S2 to prepare electrode paste for alkaline storage batteries, containing additive as first powder 1, second powder 2 with particle size different from that of first powder 1, and polysaccharide 3. In addition, the average particle size of first powder 1 needs to be in the range between 0.1 µm and 5 µm, and that of second powder 2 needs to be in the range between 8 µm and 35 µm.

In the above description, cobalt metal, CoOOH, Yb₂O₃, and Y₂O₃ act effectively as first powder 1. However, types of first powder 1 as additive are not limited thereto. The same advantage is achieved when CoO or Co(OH)₂ is added as a cobalt compound, or an oxide, hydroxide, or fluoride containing at least one of Y, Er, Tm, Yb, and Lu is added as a rare-earth element compound.

This exemplary embodiment describes the case of using an active material as second powder 2 and an additive as first powder 1. However, the same advantage is achievable when two types of active material with the same composition but different average particle sizes are used for improving the filling factor. This case is described below. More specifically, the case of using an active material as first powder 1 as same as second powder 2 is described next.

First, the manufacturing method of sample E21 is described. As shown in Fig. 1, nickel hydroxide which is first powder 1 with an average particle size of 4 µm and whose surface is coated with Co(OH)₂, and xanthan gum powder which is polysaccharide 2 are kneaded together with an appropriate amount of deionized water which is dispersion medium 4, for 30 minutes at a rotation rate of 50 r.p.m. in the planetary mixer (S1). Then, nickel hydroxide which is second powder 2 with an average particle size of 10 µm and whose surface is coated with Co(OH)₂ is added to this paste and kneaded for 20 minutes at a rotation rate of 10 r.p.m. in the planetary mixer (S2). Lastly, aqueous dispersion of PTFE binder which is binder 5 is added to complete the positive electrode paste. The content of coated Co(OH)₂ relative to 100 part weight of nickel hydroxide is 7 part weight. A compounding ratio of nickel hydroxide as first powder 1 and nickel hydroxide as second powder 2 is 1:1 in the weight ratio. A positive electrode of 0.6 mm thick is prepared using this positive electrode paste in the same way as sample E11. The Ni/MH battery of sample E21 is manufactured in the same way as sample E11 using this positive electrode and the negative electrode same as that in sample E 11.

In the manufacture of samples E22 and E23, the average particle sizes of second powder 2 are changed to 15 µm and 8 µm, respectively, in the manufacturing method of sample E21. Other conditions are the same as E21 for manufacturing Ni/MH batteries of samples E22 and E23.

In the manufacture of samples E24 to E26, the average particle sizes of first powder 1 are changed to 5 µm, 2 µm, and 0.1 µm, respectively, in the manufacturing method of sample E21. Other conditions are the same as E21 for manufacturing Ni/MH batteries of samples E24 to E26.

To compare with these samples E21 to E26, the following samples are manufactured. More specifically, a positive electrode paste is manufactured by collectively kneading materials same as sample E21 all together with an appropriate amount of deionized water in the planetary mixer for 30 minutes at a rotation rate of 10 r.p.m. Other conditions are the same as E21 for manufacturing Ni/MH batteries of samples C21.

In the manufacture of C22, the average particle size of second powder 2 is changed to 7µm in the manufacturing method of sample E21. Other conditions are the same as E21 for manufacturing Ni/MH batteries of sample C22.

In manufacture of samples C23 and C24, the average particle sizes of first powder 1 are changed to 6µm and 0.05 µm, respectively, in the manufacturing method of sample E21. Other conditions are the same as sample E21 for manufacturing Ni/MH batteries of samples C23 and C24.

After leaving the batteries of each sample and applying initial charge and discharge in the same way as described previously, the normal-temperature charge-discharge test is conducted. Table 2 shows evaluation results and specifications of each sample.

**Table 2**

| Sample | Positive electrode | | | Normal temp. discharge capacity (mAh) |
|---|---|---|---|---|
| | 1^{st} powder (µm) | 2^{nd} powder (µm) | Kneading method | |
| E21 | 4 | 10 | Fig. 1 | 2748 |
| E22 | 4 | 15 | Fig. 1 | 2762 |
| E23 | 4 | 8 | Fig. 1 | 2696 |
| E24 | 5 | 10 | Fig. 1 | 2712 |
| E25 | 2 | 10 | Fig. 1 | 2728 |
| E26 | 0.1 | 10 | Fig. 1 | 2700 |
| C21 | 4 | 10 | Fig. 2 | 2617 |
| C22 | 4 | 7 | Fig. 1 | 2653 |
| C23 | 6 | 10 | Fig. 1 | 2670 |
| C24 | 0.05 | 10 | Fig. 1 | 2667 |

When the evaluation results for sample E21 are compared with the evaluation results for sample C21 which is made by a different manufacturing method for the positive electrode paste, sample E21 has a larger normal-temperature discharge capacity. The positive electrode paste of sample C21 is prepared using the collective kneading method shown in Fig. 2. On the other hand, the positive electrode paste of sample E21 is prepared using the manufacturing method shown in Fig. 1. Accordingly, first powder 1 is more efficiently dispersed with respect to second powder 2. As a result, the normal-temperature charge-discharge characteristic of sample E21 is further improved compared with that of sample E11. This is because the weight of the positive active material per unit volume has increased by the filling factor higher than that of sample E11. The manufacturing method in the exemplary embodiment thus increases battery capacitance even if powders of the same composition are mixed.

However, if the average particle size of second powder 2 is too small as in the case of sample C22, xanthan gum which is polysaccharide 3 resists adsorption onto second powder 2 itself. This drops the filling factor due to degraded dispersibility of second powder 2. In contrast, when the average particle size of nickel hydroxide is 8µm or larger as in the case of samples E21 to E23, the normal-temperature charge-discharge characteristic is favorable.

If the average particle size of first powder 1 is too large as in the case of sample C23, there is no substantive difference in particle sizes between second powder 2 and first powder 1. This results in excessive dispersion of first powder 1, resulting in degraded filling factor. On the other hand, if the average particle size of first powder 1 is too small as in the case of sample C24, adsorptive property of polysaccharide 3 to first powder 1 degrades even if the manufacturing method of the exemplary embodiment is applied. Accordingly, degraded dispersibility of first powder 1 causes degraded filling factor. In all these cases, the normal-temperature charge-discharge efficiency is low. In contrast, if the average particle size of first powder 1 is in the range between 0.1 µm and 5 µm as in the case of samples E21 and E24 to E26, the samples show a good normal-temperature charge-discharge characteristic.

### INDUSTRIAL APPLICABILITY

Application of the manufacturing method of the present invention achieves a higher battery capacity by improving the effects of additives and improving the filling factor of the active material used in the electrodes of alkaline storage batteries. Accordingly, the manufacturing method of the present invention is broadly applicable to alkaline storage batteries used as power sources in all types of equipment, achieving significant advantages.

## Claims

1. A manufacturing method of an electrode paste for alkaline storage batteries, comprising:
first-kneading a first powder and polysaccharide, the first powder having an average particle size ranging between 0.1 µm and 5 µm; and
second-kneading a first mixture prepared in the first-kneading step and a second powder, the second powder having an average particle size ranging between 8 µm and 35 µm.

2. The manufacturing method of an electrode paste for alkaline storage batteries according claim 1, further comprising;
third-kneading a second mixture prepared in the second-kneading step and a particulate binder.

3. The manufacturing method of an electrode paste for alkaline storage batteries according claim 1, wherein the electrode paste is a positive electrode paste, the second powder is nickel hydroxide, and the first powder is at least one of cobalt, a cobalt compound, and a rare-earth element compound.

4. The manufacturing method of an electrode paste for alkaline storage batteries according claim 3, wherein the polysaccharide is xanthan gum.

5. The manufacturing method of an electrode paste for alkaline storage batteries according claim 1, wherein the electrode paste is a negative electrode paste, the second powder is hydrogen-storing alloy, and the first powder is a rare-earth element compound.

6. The manufacturing method of an electrode paste for alkaline storage batteries according claim 5, wherein the polysaccharide is one of carboxymethylcellulose and denatured carboxymethylcellulose.

7. The manufacturing method of an electrode paste for alkaline storage batteries according claim 1, wherein the electrode paste is a positive electrode paste, and both of the first powder and the second powder include nickel hydroxide.

## Patentansprüche

1. Verfahren zur Herstellung einer Elektrodenpaste für alkalische Speicherbatterien, umfassend:
erstes Kneten eines ersten Pulvers und Polysaccharids, wobei das erste Pulver eine mittlere Partikelgröße im Bereich zwischen 0,1 µm und 5 µm aufweist; und
zweites Kneten einer ersten Mischung hergestellt in dem ersten Knetschritt und eines zweiten Pulvers, wobei das zweite Pulver eine mittlere Partikelgröße in dem Bereich zwischen 8 µm und 35 µm aufweist.

2. Verfahren zur Herstellung einer Elektrodenpaste für alkalische Speicherbatterien nach Anspruch 1, des Weiteren umfassend:
drittes Kneten einer zweiten Mischung hergestellt in dem zweiten Knetschritt und eines teilchenförmigen Bindemittels.

3. Verfahren zur Herstellung einer Elektrodenpaste für alkalische Speicherbatterien nach Anspruch 1, wobei die Elektrodenpaste eine positive Elektrodenpaste ist, das zweite Pulver Nickelhydroxid ist und das erste Pulver wenigstens eines ist aus Kobalt, einer Kobaltverbindung oder einer Verbindung eines Seltenerdelementes.

4. Verfahren zur Herstellung einer Elektrodenpaste für alkalische Speicherbatterien nach Anspruch 3, wobei das Polysaccharid Xanthangummi ist.

5. Verfahren zur Herstellung einer Elektrodenpaste für alkalische Speicherbatterien nach Anspruch 1, wobei die Elektrodenpaste eine negative Elektrodenpaste ist, das zweite Pulver eine Wasserstoff speichernde Legierung ist und das erste Pulver eine Verbindung eines Seltenerdelementes ist.

6. Verfahren zur Herstellung einer Elektrodenpaste für alkalische Speicherbatterien nach Anspruch 5, wobei das Polysaccharid eines aus Carboxymethylcellulose oder denaturierter Carboxymethylcellulose ist.

7. Verfahren zur Herstellung einer Elektrodenpaste für alkalische Speicherbatterien nach Anspruch 1, wobei die Elektrodenpaste eine positive Elektrodenpaste ist, und sowohl das erste Pulver als auch das zweite Pulver Nickelhydroxid enthalten.

## Revendications

1. Procédé de fabrication d'une pâte pour électrode pour batteries d'accumulateurs alcalines, comprenant :
un premier pétrissage d'une première poudre et de polysaccharide, la taille moyenne des particules de la première poudre étant comprise entre 0,1 µm et 5 µm ; et
un deuxième pétrissage d'un premier mélange préparé à l'étape de premier pétrissage et d'une seconde poudre, la taille moyenne des particules de la seconde poudre étant comprise entre 8 µm et 35 µm.

2. Procédé de fabrication d'une pâte pour électrode pour batteries d'accumulateurs alcalines selon la revendication 1, comprenant en outre :
un troisième pétrissage d'un second mélange préparé à l'étape de deuxième pétrissage et d'un liant particulaire.

3. Procédé de fabrication d'une pâte pour électrode pour batteries d'accumulateurs alcalines selon la revendication 1, dans lequel la pâte pour électrode est une pâte pour électrode positive, la seconde poudre est de l'hydroxyde de nickel et la première poudre est constituée au moins de cobalt, d'un composé de cobalt et d'un composé d'élément de terre rare.

4. Procédé de fabrication d'une pâte pour électrode pour batteries d'accumulateurs alcalines selon la revendication 3, dans lequel le polysaccharide est de la gomme de xanthane.

5. Procédé de fabrication d'une pâte pour électrode pour batteries d'accumulateurs alcalines selon la revendication 1, dans lequel la pâte pour électrode est une pâte pour électrode négative, la seconde poudre est un alliage contenant de l'hydrogène et la première poudre est un composé d'élément de terre rare.

6. Procédé de fabrication d'une pâte pour électrode pour batteries d'accumulateurs alcalines selon la revendication 5, dans lequel le polysaccharide est un élément parmi le carboxyméthylcellulose et le carboxyméthylcellulose dénaturé.

7. Procédé de fabrication d'une pâte pour électrode pour batteries d'accumulateurs alcalines selon la revendication 1, dans lequel la pâte pour électrode est une pâte pour électrode positive et la première poudre et la seconde poudre contiennent toutes deux de l'hydroxyde de nickel.
